# EUROPÄISCHE PATENTSCHRIFT

(11) **EP 1 898 120 B1**
(45) Veröffentlichungstag und Bekanntmachung des Hinweises auf die Patenterteilung: **22.12.2010**
(21) Anmeldenummer: 07017251.5
(22) Anmeldetag: 04.09.2007
(51) Int. Cl.: F16F 9/54

(54) **Dämpfungselement**
Damping element
Elément d'amortissement

(30) Priorität: 08.09.2006 DE 102006042801
(43) Veröffentlichungstag der Anmeldung: 12.03.2008
(73) Patentinhaber: ZF Friedrichshafen AG, 88046 Friedrichshafen (DE)
(72) Erfinder: Weiss, Rainer, 56307 Dernbach (DE)

(56) Entgegenhaltungen:
- EP-A- 1 065 405
- EP-A- 1 526 302
- EP-A- 1 555 454
- WO-A-02/083438
- DE-A1- 10 208 560
- DE-B3-102005 009 152
- FR-A- 2 692 954
- JP-A- 6 066 343

## Beschreibung

Die Erfindung bezieht sich auf ein Dämpfungselement zwischen zwei Massen, bestehend aus einem Behälterrohr, einem darin in einem Dämpfungsmedium verschiebbar angeordneten Kolben, einer mit diesem verbundenen Kolbenstange und einem Befestigungsteil zur Verbindung des Dämpfungselements mit einer ersten der beiden gegeneinander schwingungsarm zu haltenden Massen, wobei die Kolbenstange mit einer der Massen verbunden ist, und wobei das Befestigungsteil einen Behälterboden, ein Aufnahmeelement zur Befestigung an einem Achslenker und ein dazwischen angeordnetes Verbindungsteil aufweist.

Es sind bereits Dämpfungselemente der vorgenannten Art bekannt (DE 199 39 515 C2), die beispielsweise an Fahrzeugen zwischen einer ersten Masse, nämlich der von Schwingungen freizuhaltenden Fahrgastzelle und einer zweiten Masse, nämlich den beim Fahrbetrieb unter Schwingungen stehenden Rädern bzw. des Fahrwerkes eingesetzt sind. Das Dämpfungselement ist mittels einer Kolbenstange z. B. mit der ersten Masse und mit einem Befestigungsteil mit einer zweiten Masse verbunden, wobei die Kolbenstange mit einem Dämpfungskolben verbunden ist, welcher in einem Arbeitszylinder eines Behälterrohres angeordnet ist. Das Problem des Befestigungsteiles, welches mit einem Verbindungsteil eines Aufnahmeelementes verbunden ist, besteht darin, dass eine ausreichende Bauteilfestigkeit vorhanden sein muss. Darüber hinaus ist bei derartigen Bauteilen auch eine ausreichende Dauerfestigkeit, sowie ein kleiner Bauraum als auch ein geringes Gewicht gefordert.

Es sind des Weiteren noch Befestigungsteile bekannt (DE 103 48 971 A1), die mehrteilig auf einem Behälterboden, einem Schaft und einer an die erste Masse anschließenden Gabel versehen sind. Des Weiteren sind Befestigungselemente in einteiliger Bauart bekannt (DE 10 2004 001 933 A1).

Außerdem sind Befestigungselemente für Schwingungsdämpfer bekannt (z.B. DE 102 08 560 A1 (dem Oberbegriff entsprechend), JP 06 066343A, FR-A-2.692.954), bei denen auch Blechteile Verwendung finden, jedoch jeweils eine zentrische Anordnung des Verbindungsteiles vorsehen.

Aufgabe der Erfindung ist es, ein Dämpfungselement, bestehend aus einem Behälterrohr, einer Kolbenstange und mindestens einem Befestigungsteil, auf kostengünstiger Weise und mit geringem Montageaufwand und Fertigungsaufwand herzustellen, wobei nicht nur eine ausreichende Dauerfestigkeit und ein geringes Gewicht erzielt werden kann, sondern dass außerdem die Anordnung des Befestigungsteiles derart optimiert wird, dass der Bauraum für anderweitige Fahrwerksteile ausgenutzt werden kann.

Zur Lösung dieser Aufgabe ist erfindungsgemäß vorgesehen, dass das Verbindungsteil zumindest über einen axial verlaufenden Teilbereich als geradlinig verlaufendes Blechteil ausgebildet ist, und dass das Verbindungsteil, bezogen auf die Längsachsen des Dämpfungselements, außermittig angeordnet ist.

Vorteilhaft ist hierbei, dass das Verbindungsteil, welches als Blechteil hergestellt ist, einerseits ein geringes Gewicht aufweist und andererseits kostengünstig und wirtschaftlich herstellbar ist. Mit Vorteil lässt sich dabei vorsehen, dass das Verbindungsteil als u-förmiges Blechteil ausgebildet ist.

Desweiteren ist von Vorteil, dass die erfindungsgemäße außermittige Anordnung des Verbindungsteiles einseitig Platz schaffen kann, um vorhandene Achskomponenten problemlos in den vorhandenen Einbauraum aufzunehmen.

Alternativ kann vorgesehen werden, dass das Verbindungsteil als quadratisches oder rechteckiges oder zylindrisches Rohr ausgebildet ist. Vorteilhaft ist hierbei, dass das Rohr einteilig mit dem Behälterrohr ausgebildet sein kann und dass der für die Anbauteile benötigte Bauraum durch eine Eindrückung im Rohr geschaffen wird. Hierzu eignet sich besonders ein zylindrisches Rohr auf Grund der statischen Festigkeit.

Eine weitere Ausführungsform sieht vor, dass das Verbindungsteil mit dem Behälterboden und/oder dem Aufnahmeelement verschweißt ist.

Eine weitere Ausführungsform sieht vor, dass als Aufnahmeelement ein Gabelelement oder eine zylindrische Buchse vorgesehen ist.

Bevorzugte Ausführungsbeispiele der Erfindung sind in den Zeichnungen schematisch dargestellt.

Es zeigt :
Figur 1 und 2 jeweils eine Ausführungsform eines Dämpfungselementes, bestehend aus einem Behälterrohr und einem Befestigungsteil, zum Anbau an ein Fahrzeug
Figur 3 einen Schnitt durch das Verbindungsteil
Figur 4 ein u-förmiges Verbindungsteil aus Blech in verschiedenen Abwicklungsstadien
Figur 5 ein quadratisches Rohr als Verbindungsteil im Schnitt
Figur 6 ein rechteckiges Rohr als Verbindungsteil, ebenfalls im Schnitt
Figur 7 und 8 eine Variante mit einer optimierten Abstützung
Figur 9 eine Variante mit einem rohrförmigen Verbindungsteil.

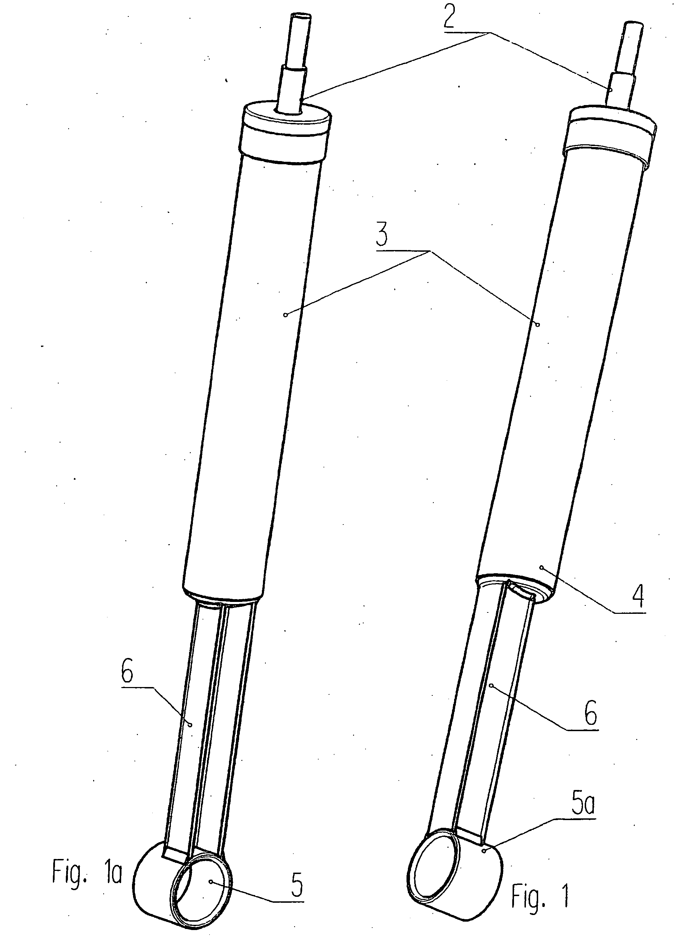

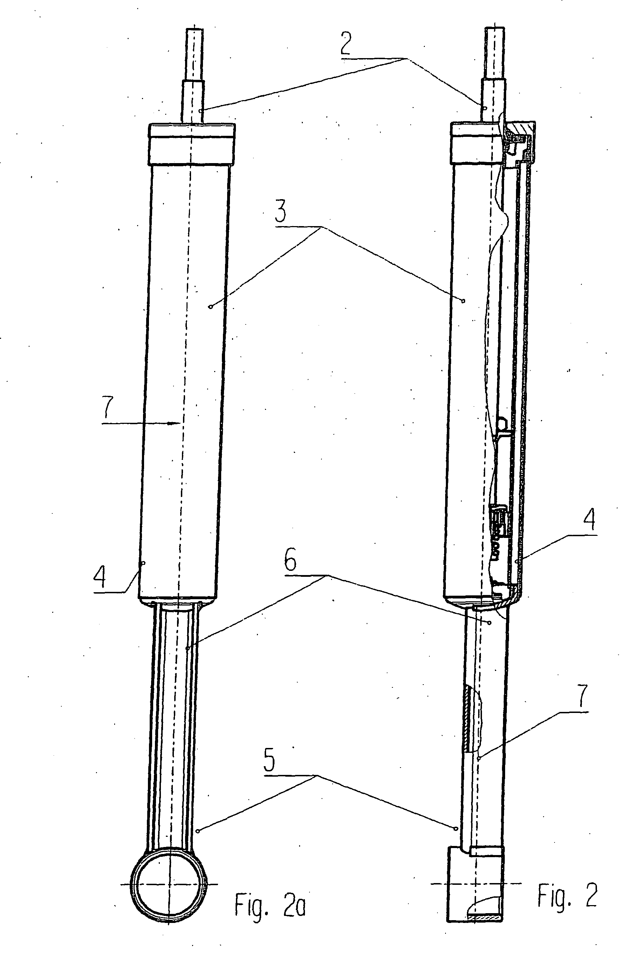

Das in Figur 1, Figur 1a und Figur 2 und 2a dargestellte Dämpfungselement 1 besteht im Wesentlichen aus der Kolbenstange 2, an dessen Ende ein Dämpfungskolben (nicht dargestellt) angeordnet ist, einem Behälterrohr 3 an dessen Behälterboden 4 ein Verbindungsteil 6 angebracht ist.

Das Verbindungsteil 6 besteht aus einem Behälterboden 4 und einem Aufnahmeelement 5, welches in diesem Ausführungsbeispiel als rohrförmige Buchse 5a ausgebildet ist. Der Behälterboden 4 ist im Behälterrohr 3 zentriert und fixiert, während der Behälterboden 4 mit dem Verbindungsteil 6, z.B. durch Schweißen, verbunden ist, gleichzeitig ist das Verbindungsteil 6 mit der rohrförmigen Buchse 5a ebenfalls durch eine Schweißverbindung gesichert.

Aus der Schnittdarstellung gemäß Figur 2 ist zu erkennen, dass das Verbindungsteil 6 gegenüber der Längsachse 7 des Dämpfungselementes 1 außermittig angeordnet ist, so dass Raum geschaffen wird, der für Fahrwerksteile und/oder Achskomponenten ausgenutzt werden kann, dabei bietet sich auch die u-förmig geschlossene Seite an. Durch die u-förmige Gestaltung des Verbindungsteiles ist eine ausreichende statische Festigkeit gegeben, die einem herkömmlichen Verbindungsteil rohrförmiger Bauart nicht nachsteht.

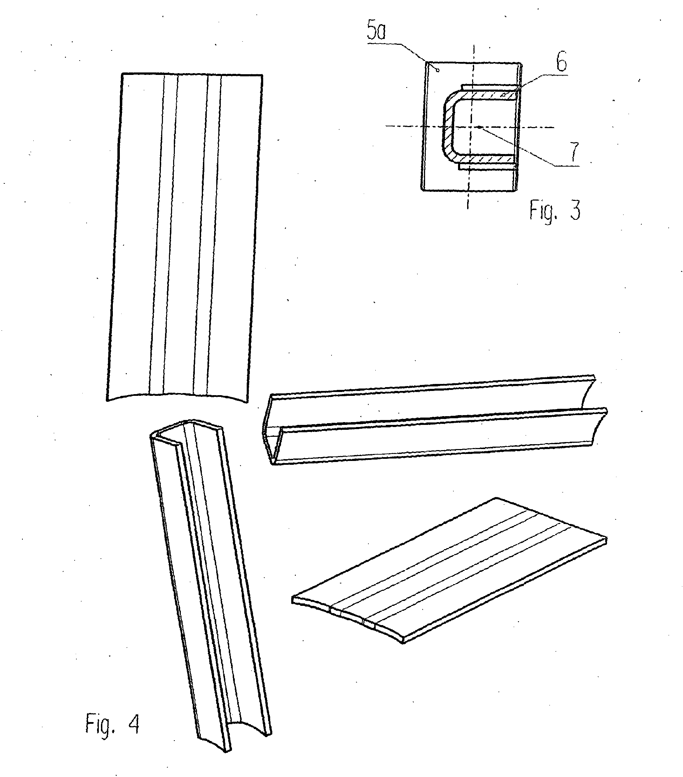

Aus der Figur 3 ist als Einzelheit ein Verbindungsteil 6 zusammen mit einer rohrförmigen Buchse 5a in Draufsicht dargestellt, wobei zu erkennen ist, dass das Verbindungsteil 6 gegenüber der Längsachse 7 des Dämpfungselementes 1 außermittig angeordnet ist. Auf der in der Ansicht linken Seite des Bildes ist der Freiraum zu erkennen, den die außermittige Anordnung des Verbindungsteiles 6 zur Verfügung stellt.

In der Figur 4 ist dargestellt, wie das u-förmige Blechteil als Verbindungsteil 6 in einzelnen Schritten hergestellt ist, wobei es kostengünstig konturiert aus einem Blechteil herausgeschnitten und entsprechend zum u-förmigen Teil geformt werden kann.

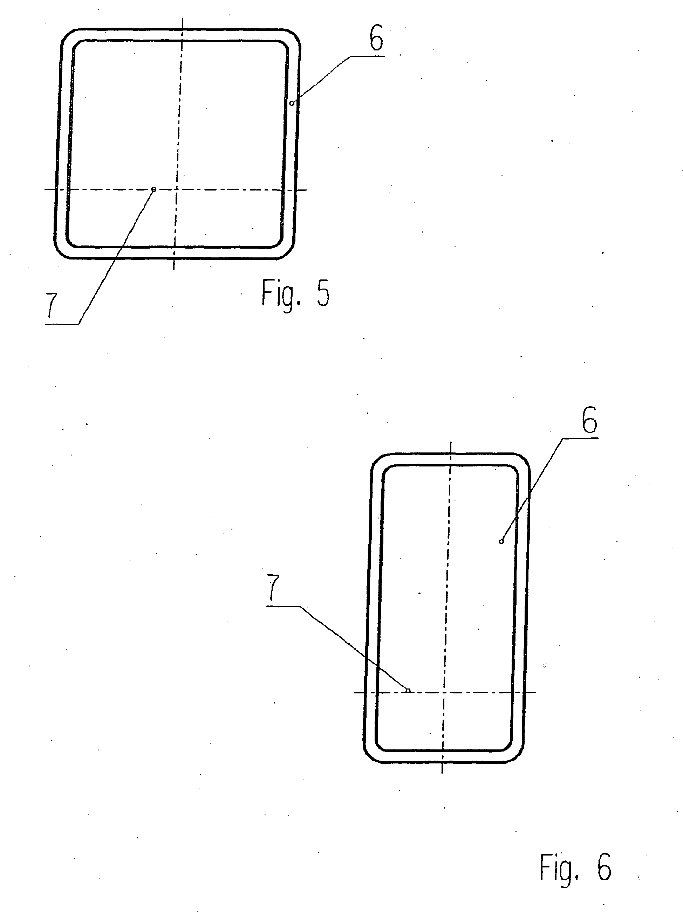

Alternativ zeigt die Figur 5 und Figur 6 ein quadrat- bzw. ein rechteckförmiges Verbindungsteil 6, wobei auch deren Anordnungen jeweils gegenüber der Längsachse 7 außermittig erfolgt.

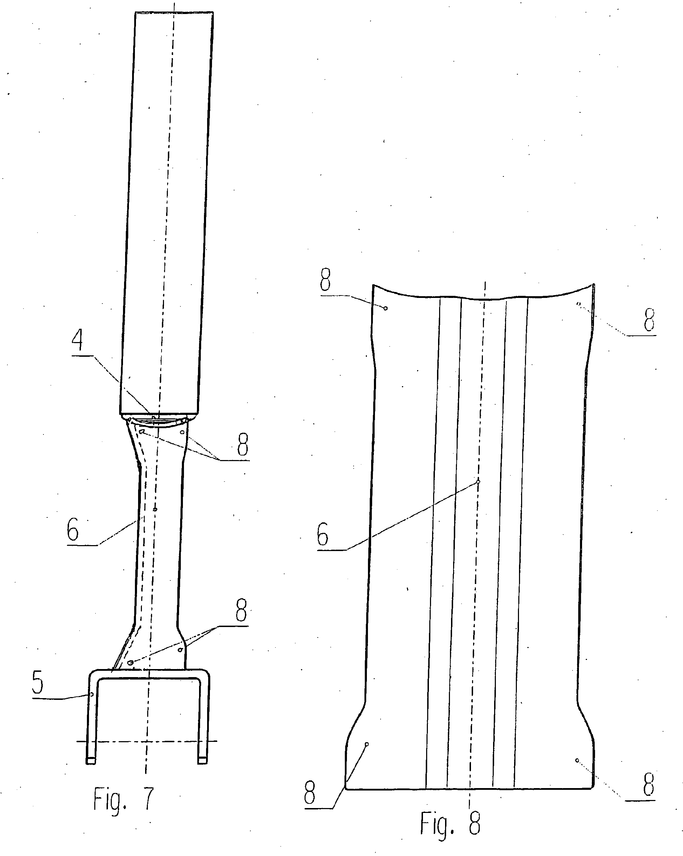

In die Figur 7 und 8 ist eine Variante dargestellt, deren Kontur derart ausgebildet ist, dass bereits im Zuschnitt Abstützabschnitte 8 konturiert werden, die der Abstützung am Aufnahmeelement 5 und/oder am Behälterboden 4 dienen.

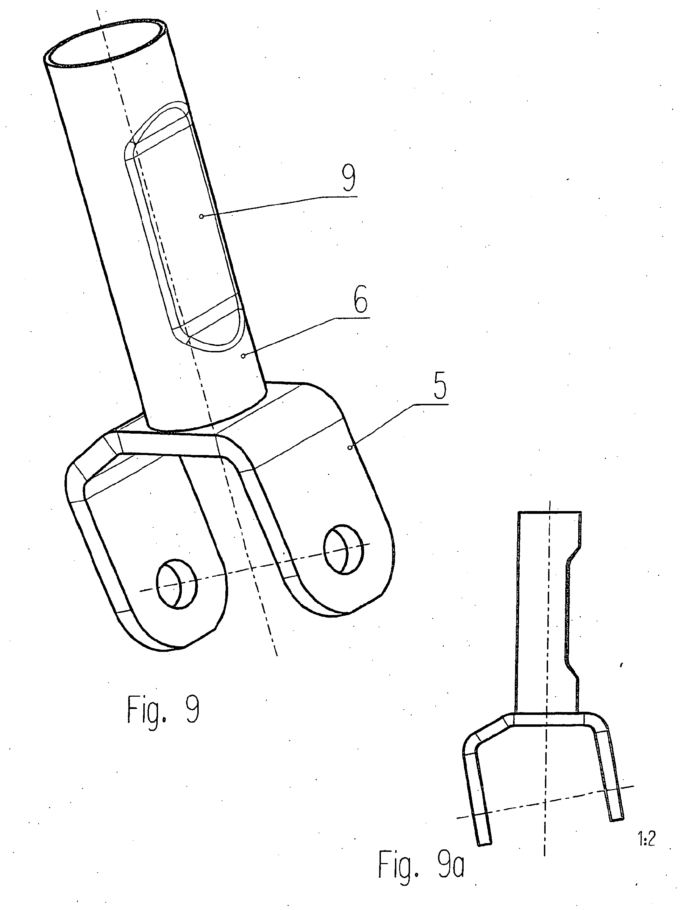

Figur 9 zeigt eine Variante mit einem rohrförmigen Verbindungsteil 6 und einem Aufnahmeelement 5, wobei das Verbindungsteil 6 mit einer Eindrückung 9 zur Schaffung von zusätzlichem Bauraum für Fahrwerksteile versehen ist.

### Bezugszeichenliste

- 1 -: Dämpfungselement
- 2 -: Kolbenstange
- 3 -: Behälterrohr
- 4 -: Behälterboden
- 5 -: Aufnahmeelement
- 5a -: rohrförmige Buchse
- 6 -: Verbindungsteil
- 7 -: Längsachse
- 8 -: Abstützelemente
- 9 -: Eindrückung

## Patentansprüche

1. Dämpfungselement (1) zwischen zwei Massen, bestehend aus einem Behälterrohr (3), einem darin in einem Dämpfungsmedium verschiebbar angeordneten Kolben, einer mit diesem verbundenen Kolbenstange (2) und einem Befestigungsteil zur Verbindung des Dämpfungselements (1) mit einer ersten der beiden gegeneinander schwingungsarm zu haltenden Massen, wobei die Kolbenstange (2) mit einer der Massen verbunden ist, und wobei das Befestigungsteil einen Behälterboden (4), ein Aufnahmeelement (5) zur Befestigung an einem Achslenker und ein dazwischen angeordnetes Verbindungsteil (6) aufweist,
**dadurch gekennzeichnet,**
**dass** das Verbindungsteil (6) zumindest unter einem axial verlaufenden Teilbereich als geradlinig verlaufendes Blechteil ausgebildet ist, und dass das Verbindungsteil (6), bezogen auf die Längsachsen (7) des Dämpfungselements (1), außermittig angeordnet ist.

2. Dämpfungselement nach Anspruch 1,
**dadurch gekennzeichnet,**
**dass** das Verbindungsteil (6) als u-förmiges Blechteil ausgebildet ist.

3. Dämpfungselement nach Anspruch 1,
**dadurch gekennzeichnet,**
**dass** das Verbindungsteil (6) als quadratisches oder rechteckiges Rohr oder zylindrisches Rohr ausgebildet ist.

4. Dämpfungselement nach Anspruch 1,
**dadurch gekennzeichnet,**
**dass** das Verbindungsteil (6) mit dem Behälterboden (4) und/oder dem Aufnahmeelement (5) verschweißt ist.

5. Dämpfungselement nach Anspruch 1,
**dadurch gekennzeichnet,**
**dass** als Aufnahmeelement (5) ein Gabelelement oder eine zylindrische Buchse vorgesehen ist.

## Claims

1. Damping element (1) between two masses, composed of a container tube (3), a piston arranged in said container tube so as to be movable in a damping medium, a piston rod (2) connected to said piston, and a fastening part for connecting the damping element (1) to a first of the two masses which are to be held relative to one another with little vibration, with the piston rod (2) being connected to one of the masses, and with the fastening part having a container base (4), a holding element (5) for fastening to an axle link, and a connecting part (6) arranged therebetween,
**characterized**
**in that** the connecting part (6) is formed, at least below an axially running partial region, as a rectilinearly running sheet-metal part, and in that the connecting part (6) is arranged eccentrically with respect to the longitudinal axes (7) of the damping element (1).

2. Damping element according to Claim 1,
**characterized**
**in that** the connecting part (6) is formed as a U-shaped sheet-metal part.

3. Damping element according to Claim 1,
**characterized in that** the connecting part (6) is formed as a square or rectangular tube or cylindrical tube.

4. Damping element according to Claim 1,
**characterized**
**in that** the connecting part (6) is welded to the container base (4) and/or to the holding element (5).

5. Damping element according to Claim 1,
**characterized**
**in that** a fork element or a cylindrical sleeve is provided as a holding element (5).

## Revendications

1. Dispositif d'amortissement (1) entre deux masses, composé d'un boîtier tubulaire (3), d'un piston disposé de façon coulissante dans un fluide d'amortissement contenu dans celui-ci, d'une tige de piston (2) reliée à celui-ci et d'une pièce de fixation pour la liaison du dispositif d'amortissement (1) avec une première des deux masses à maintenir sans oscillation l'une par rapport à l'autre, dans lequel la tige de piston (2) est reliée à une des masses, et dans lequel la pièce de fixation présente un fond de boîtier (4), un élément de réception (5) pour la fixation à un guide d'essieu et une pièce de liaison (6) disposée entre ceux-ci, **caractérisé en ce que** la pièce de liaison (6) se présente sous la forme d'une pièce de tôle s'étendant en ligne droite au moins sous une région partielle s'étendant axialement, et **en ce que** la pièce de liaison (6) est disposée de façon décentrée par rapport aux axes longitudinaux (7) du dispositif d'amortissement (1).

2. Dispositif d'amortissement selon la revendication 1, **caractérisé en ce que** la pièce de liaison (6) se présente sous la forme d'une pièce de tôle en forme de U.

3. Dispositif d'amortissement selon la revendication 1, **caractérisé en ce que** la pièce de liaison (6) se présente sous la forme d'un tube carré ou rectangulaire ou d'un tube cylindrique.

4. Dispositif d'amortissement selon la revendication 1, **caractérisé en ce que** la pièce de liaison (6) est soudée au fond de boîtier (4) et/ou à l'élément de réception (5).

5. Dispositif d'amortissement selon la revendication 1, **caractérisé en ce qu'**il est prévu comme élément de réception (5) un élément à fourche ou une douille cylindrique.
